# EUROPÄISCHE PATENTSCHRIFT

(11) **EP 4 069 757 B1**
(45) Veröffentlichungstag und Bekanntmachung des Hinweises auf die Patenterteilung: **31.01.2024**
(21) Anmeldenummer: 20820116.0
(22) Anmeldetag: 03.12.2020
(51) Int. Cl.: C08F 30/02, C08K 3/016, C08K 5/00, C08L 67/04

(54) **FLAMMHEMMENDES POLYMER UMFASSEND PHOSPHORHALTIGE WIEDERHOLUNGSEINHEITEN, KUNSTSTOFFZUSAMMENSETZUNG UMFASSEND DAS FLAMMHEMMENDE POLYMER, VERFAHREN ZUR HERSTELLUNG DES FLAMMHEMMENDEN POLYMERS SOWIE DESSEN VERWENDUNG**
FLAME RETARDANT POLYMER COMPRISING PHOSPHORUS-CONTAINING REPEATING UNITS, PLASTIC COMPOSITION COMPRISING THE FLAME RETARDANT POLYMER, PROCESS FOR PRODUCING THE FLAME RETARDANT POLYMER AND USE THEREOF
POLYMÈRE IGNIFUGE COMPRENANT DES UNITÉS DE RÉPÉTITION CONTENANT DU PHOSPHORE, COMPOSITION DE PLASTIQUE COMPRENANT LE POLYMÈRE IGNIFUGE, PROCÉDÉ DE PRODUCTION DU POLYMÈRE IGNIFUGE ET SON UTILISATION

(30) Priorität: 06.12.2019 DE 102019219029
(43) Veröffentlichungstag der Anmeldung: 12.10.2022
(73) Patentinhaber: Fraunhofer-Gesellschaft zur Förderung der angewandten Forschung e.V., 80686 München (DE)
(72) Erfinder: SAG, Jacob, 64289 Darmstadt (DE); SCHÖNBERGER, Frank, 64289 Darmstadt (DE); DÖRING, Manfred, 64289 Darmstadt (DE); ROCH, Hendrik, 64289 Darmstadt (DE); KABASCI, Stephan, 64289 Darmstadt (DE)
(74) Vertreter: Pfenning, Meinig & Partner mbB
(86) Internationale Anmeldenummer: PCT/EP2020/084499
(87) Internationale Veröffentlichungsnummer: WO 2021/110852

(56) Entgegenhaltungen:
- DE-A1-102018 100 984
- LIN YONGQIANG ET AL: "Synthesis of a novel highly effective flame retardant containing multivalent phosphorus and its application in unsaturated polyester resins", RSC ADVANCES, [Online] Bd. 6, Nr. 89, 1. Januar 2016 (2016-01-01) , Seiten 86632-86639, XP055780100, DOI: 10.1039/C6RA19798A Gefunden im Internet: URL:https://pubs.rsc.org/en/content/articl epdf/2016/ra/c6ra19798a>
- DATABASE CA [Online] CHEMICAL ABSTRACTS SERVICE, COLUMBUS, OHIO, US; 4. Februar 2016 (2016-02-04), MU, BO ET AL: "Method for preparing phosphorus-containing intrinsic flame-retardant acrylic resin", XP002802215, gefunden im STN Database accession no. 2016:183407 -& CN 105 294 921 A (UNIV LANZHOU TECH) 3. Februar 2016 (2016-02-03)
- DATABASE CA [Online] CHEMICAL ABSTRACTS SERVICE, COLUMBUS, OHIO, US; 21. Dezember 2016 (2016-12-21), JIANG, SAIHUA ET AL: "DOPO-based flame retardant and preparation method thereof", XP002802216, gefunden im STN Database accession no. 2016:2110643 -& CN 106 243 385 B (UNIV SOUTH CHINA TECH) 14. September 2018 (2018-09-14)
- DATABASE CA [Online] CHEMICAL ABSTRACTS SERVICE, COLUMBUS, OHIO, US; 3. Mai 2013 (2013-05-03), QIAN, XIAODONG ET AL: "Manufacture and application of reactive p-containing flame retardant containing DOPO and active double bond", XP002802217, gefunden im STN Database accession no. 2013:687941 -& CN 103 073 746 B (SUZHOU ANHONGTAI NEW MATERIAL CO LTD) 23. April 2014 (2014-04-23)

## Beschreibung

Die vorliegende Erfindung betrifft ein flammhemmendes Polymer umfassend phosphorhaltiger Wiederholungseinheiten einer allgemeinen Formel Aₙ-X-Bₘ, wobei A ein polymerer Rest, Beine phosphorhaltige Gruppierung gemäß einer allgemeinen Formel und X eine n + m -wertige phosphorhaltige Gruppe ist. Zudem betrifft die vorliegende Erfindung eine Kunststoffzusammensetzung umfassend das flammhemmende Polymer, Verfahren zur Herstellung des flammhemmenden Polymers sowie dessen Verwendung.

Durch ihre breiten Anwendungsmöglichkeiten haben Kunststoffe in den letzten Jahrzehnten eine unverzichtbare Rolle im alltäglichen Leben eingenommen. Wegen ihrer leichten Entflammbarkeit ist der Einsatz verschiedener Flammschutzmittel (FSM) nötig, um die Ausbreitung von Bränden einzuschränken bzw. zu verlangsamen. Auf Grund ihrer hohen Effektivität wurden besonders halogenierte FSM verwendet, die die Flamme in der Gasphase vergiften. Allerdings ist diese Klasse von FSM sowohl toxikologisch als auch ökologisch bedenklich, weshalb bereits viele halogenhaltige Verbindungen vom Gesetzgeber verboten wurden.

Eine Alternative zu den halogenhaltigen stellen die phosphorhaltigen FSM dar, die sich bereits seit mehreren Jahren etabliert haben. Diese Verbindungen weisen je nach ihrer chemischen Struktur eine Gas- oder Festphasenaktivität auf. Um eine Verträglichkeit mit der Matrix zu gewährleisten und eine Migration der Verbindungen zu vermeiden, werden zunehmend polymere Verbindungen eingesetzt. Die flammhemmende Wirkung der phosphorhaltigen FSM wird häufig durch Synergisten verbessert. Hierzu eignen sich neben mineralischen FSM auch stickstoffhaltige oder weitere phosphorhaltige Verbindungen. Der Synergismus zwischen unterschiedlichen phosphorhaltigen Verbindungen wird beispielsweise in WO 2014/008243 (A1) genutzt. In diesem Fall kommen verschiedene Phosphorverbindungen zum Einsatz, die sowohl eine Gasphasen- als auch Festphasenaktivität besitzen. Neben einer Vergiftung der Flamme in der Gasphase durch Radikalabfangreaktionen, wird darüber hinaus simultan eine Erstickung der Flamme durch Ausbilden einer Schutzschicht erreicht (charring). Die Folge ist ein effektiverer Flammschutz durch die Kopplung der zwei Flammschutzmechanismen.

Auf Grund des zunehmenden Bedürfnisses, den ökologischen Fußabdruck von Materialien zu verringern, wurden ebenso FSM aus erneuerbaren Ressourcen entwickelt. Eine geeignete Plattformchemikalie ist beispielsweise, wie in der DE 102008012806 (A1) gezeigt, die Itaconsäure, die durch Addition phosphoryliert und anschließend polykondensiert wird. Ebenso eignen sich Acrylate als Ausgangsverbindungen, die biobasiert herstellbar sind und somit den Biogehalt der Zielverbindungen erhöhen.

Ein häufig verwendetes Strukturelement zur Herstellung phoshorhaltiger FSM stellt das 9,10-Dihydro-9-oxa-10-phospha-phenanthren-10-oxid (DOPO) dar. Über eine Phospha-Michael-Addition kann diese Verbindung in hohen Ausbeuten und ohne Nebenreaktionen an ungesättigte Ester oder Amide addiert werden. Die gebildeten Propionsäureester bzw. -amide und das Verfahren zu ihrer Herstellung sind beispielsweise aus DE 2646218 (A1) bekannt.

Verbindungen mit der allgemeinen Formel dieser Propionsäureester bzw. - amide sind prinzipiell als FSM geeignet. EP 2985335 (A1) beschreibt beispielsweise die Anwendung verschiedener DOPO-Propionsäureester in Polyurethanschaumstoffen. Um eine Migration der Verbindungen zu vermeiden, werden möglichst polymere FSM genutzt. Hierzu wird DOPO in die Wiederholungseinheit der entsprechenden Verbindung eingebaut. Aus DE 102008012806 (A1) sind phosphorhaltige Polyester bekannt, die durch Addition von DOPO an eine ungesättigte Dicarbonsäure und anschließender Polykondensation mit einem mehrwertigem Alkohol (z.B. Diol) hergestellt werden.

WO 2014/124933 (A2) beschreibt speziell die Herstellung von duromeren FSM durch Addition von DOPO an mehrfunktionelle ungesättigte Ester und anschließender radikalischer Polymerisation. Als Ausgangsverbindungen für dieses Herstellungsverfahren eignen sich beispielsweise Pentaerythritol-Tetraacrylat oder Dipentaerythritol-Hexaacrylat. Diese FSM können auch als Thermoplaste hergestellt werden und sind bereits in DE 102018100984 A1 beschrieben.

Häufig reicht der alleinige Einsatz einer einzelnen Verbindung nicht aus, um einen optimalen Flammschutz zu gewährleisten. Dementsprechend werden diese FSM in synergistischen Formulierungen eingesetzt. In glasfaserverstärktem PA66 (15% GF) weist das hauptsächlich gasphasenaktive Duromer aus Pentaerythritol-Tetraacrylat und DOPO (Poly-[DOPAc-2-PETA]) einen Synergismus in Kombination mit Melaminpolyphosphat (MPP) auf. Wird ausschließlich MPP (25 wt%) als FSM verwendet, wird im besten Fall V-1 Klassifizierung erreicht. Bereits bei einer kleinen Zugabe von nur 0,5% Poly-[DOPAc-2-PETA] wird eine V-0 Klassifizierung erzielt, wobei gleichzeitig die Gesamtbeladung an FSM auf 22,5 wt% gesenkt wird. In diesem Fall wird die Gasphasenaktivtität des Poly-[DOPAc-2-PETA] um die Festphasenaktvität des MPP ergänzt. Die Zugabe eines Synergisten ist in vielen Fällen unabdingbar und gilt nicht nur für DOPO-Derivate. Ein anderes Beispiel sind die Metallphosphinate, die ebenso mit Stickstoff- bzw. Phosphorverbindungen (Melamin- oder Ammoniumpolyphosphat) kombiniert werden. Derartige Formulierungen sind beispielhaft in der Patentliteratur beschrieben (siehe WO 9739053 (A1) und DE 19734437 (A1)).

Trotz der Nutzung eines synergistischen Effekts ist der Anteil des FSM-Gehalts in vielen Matrizen hoch und liegt typischerweise bei 20-30%. Eine derart hohe Beladung an FSM hat unweigerlich Auswirkungen auf die Polymereigenschaften, wie etwa die Fließfähigkeit, die Mechanik und die elektrischen und thermischen Eigenschaften. Um den FSM-Gehalt zu senken und diese Nachteile zu minimieren, werden vermehrt FSM entwickelt, die einen inhärenten P-P-Synergismus aufweisen. Verbindungen, die verschiedene phosphorhaltige Gruppen (Phosphinate, Phosphate, Phosphonate etc.) in einem Molekül vereinen, wirken im Brandfall nach unterschiedlichen Flammschutzmechanismen. Diese FSM besitzen dementsprechend sowohl eine Gasphasen- als auch eine Festphasenaktivität. Folglich ist ein effektiverer Flammschutz gegeben und die Gesamtbeladung an FSM kann in der jeweiligen Matrix deutlich gesenkt werden bei gleicher Flammschutzklassifizierung. Aus WO 2015/140105 (A1) ist beispielsweise das DOPO-PEPA bekannt, welches neben der Phosphinatgruppe des DOPO eine Phosphatgruppe aufweist.

DOPO-PEPA zeigt unter anderem in Copolyestern einen effektiven Flammschutz. Im Vergleich zu bekannten Systemen kann der Gesamtgehalt an FSM sowie der P-Gehalt reduziert werden (US 2015/0105484 (A1)). Nachteilig bei derartig niedermolekularen Verbindungen wie DOPO-PEPA bleibt die Migration des FSM aus der Matrix sowie der weichmachende Effekt. Ein polymeres FSM mit unterschiedlichen phosphorhaltigen Gruppen ist in WO 2018/197173 (A1) beschrieben. Nach Addition von DOPO an Itaconsäure wird über das entstehende Addukt und einem Phosphanoxid, welches mindestens zwei Hydroxylgruppen trägt, mittels Polykondensation der entsprechende Polyester hergestellt. Diese Verbindung erweist sich als wirksames FSM in PA66. Im Vergleich zum strukturell verwandten FSM Ukanol FR80, dessen flammhemmender Effekt einzig aus dem DOPO herrührt, kann der FSM-Gehalt gesenkt werden bei gleichzeitiger Verbesserung der Klassifizierung im UL94-Test.

Weitere polymere FSM mit unterschiedlichen phosphorhaltigen Gruppen sind in der Fachliteratur beschrieben (siehe Polymers, 2019, 11, 284; Polymer Degradation and Stability, 2018, 158, 190). In diesen Fällen wurden mehrfunktionelle ungesättigte Amide/ Ester über eine Phospha-Michael-Addition mit unterschiedlichen Verbindungen phosphoryliert und anschließend radikalisch polymerisiert. Als Grundgerüst dient jeweils das Triazin bzw. die Cyanursäure.

Die Verbindungen zeigen einen effektiven Flammschutz in Epoxidharzen und zeichnen sich sowohl durch ihre Gas- als auch Festphasenaktivität aus. Allerdings ist in beiden Fällen die Gasphasenaktivität dominanter. Braun et al. haben bereits gezeigt, dass die Festphasenaktivität mit dem Oxidationszustandes des Phosphors korreliert (Polymer, 2006, 47, 8495). Entscheidend für die Wirkung in der festen Phase ist die Bildung von Phosphaten bzw. Polyphosphaten, die bei den entsprechenden Verbindungen erst nach Oxidation der entsprechenden Phosphonatgruppe gebildet werden. Dies ist allerdings nur in sauerstoffreichen Polymeren möglich, die darüber hinaus im selben Temperaturbereich zerfallen müssen (Polymer Degradation and Stability, 2011, 96, 1455). Somit ist die simultane Gas- und Festphasenaktivität dieser FSM nur in einem beschränkten Einsatzgebiet möglich. In den meisten Kunststoffen erfolgt der flammschützende Effekt dieser Verbindungen hauptsächlich in der Gasphase.

Zusammenfassend lässt sich feststellen, dass FSM mit unterschiedlichen phosphorhaltigen Gruppen in einem Molekül bereits beschrieben sind und diese einen besseren Flammschutz bieten als Verbindungen, die nur eine Gruppe besitzen. Allerdings weisen die bekannten Verbindungen ausnahmslos Nachteile auf. Während das DOPO-PEPA (WO 2015/140105 (A1)) auf Grund des geringen Molekulargewichts zur Migration neigt und einen weichmachenden Effekt besitzt, wird das FSM aus WO 2018/197173 (A1) über eine Polykondensation hergestellt. Die dafür benötigten Monomere (Hydroxyalkylphosphanoxide) sind in diesem Fall enorm kostenintensiv. Darüber hinaus erfordert die Polykondensation speziellere Bedingungen. Neben höheren Reaktionstemperaturen, der Notwendigkeit von besonders reinen Edukten und eines Katalysators zum Erreichen von hohen Molekulargewichten, muss zusätzlich das Kondensationsprodukt während der Polymerisation entfernt werden. Mildere Bedingungen wie sie bei der radikalischen Polymerisation üblich sind, sind beispielsweise bei der Polymerisation von Acrylaten möglich. Die in der Literatur beschriebenen Polyacrylate mit unterschiedlichen phosphorhaltigen Gruppen, enthalten allerdings keine Phosphatgruppen, wodurch die Gasphasenaktivität stets dominanter ist. Dadurch entfaltet sich die Festphasenaktivität ausschließlich in sauerstoffreichen Polymeren, die im selben Temperaturbereich zerfallen und schränkt somit das bestmögliche Einsatzgebiet dieser FSM ein.

Der Erfindung liegt somit die Aufgabe zugrunde, ein flammhemmendes Polymer aufweisend verschiedene phosphorhaltige Gruppen bereitzustellen, dass thermisch stabil und gut verarbeitbar ist, vor allem aber durch seine Struktur sowohl eine Gas- als auch eine Festphasenaktivität im Sinne einer Flammschutzwirkung zeigt, was zu besonders guten Flammschutzeigenschaften führt.

Diese Aufgabe wird bezüglich des flammhemmenden Polymers mit den Merkmalen des Patentanspruchs 1 und bezüglich des Verfahrens zur Herstellung des flammhemmenden Polymers mit den Merkmalen des Patentanspruchs 11 gelöst. Außerdem werden in Patentanspruch 9 eine Kunststoffzusammensetzung umfassend das flammhemmende Polymer sowie in Patentanspruch 15 Verwendungsmöglichkeiten des flammhemmenden Polymers angegeben. Die jeweiligen abhängigen Patentansprüche stellen dabei vorteilhafte Weiterbildungen dar.

Erfindungsgemäß wird somit ein flammhemmendes Polymer angegeben, umfassend phosphorhaltige Wiederholungseinheiten der allgemeinen Formel I 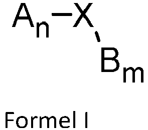 , wobei die Variablen A, B, X, m und n folgendermaßen definiert sind:
- A: ein polymerer Rest, umfassend oder bestehend aus der nachfolgenden Wiederholungseinheit gemäß der allgemeinen Formel II 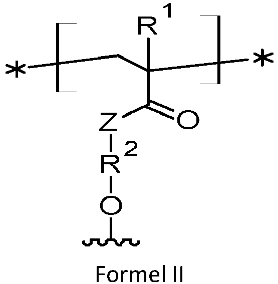
mit
- R¹: Wasserstoff (H) oder eine Alkylgruppe
- R²: Alkyl- oder Arylgruppe
- Z: O, NH

- n: eine ganze Zahl von > 1;
- B: eine Gruppierung gemäß der allgemeinen Formel III: 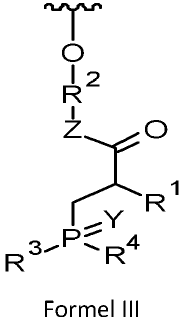
mit
- Y: O, S
- R³: eine lineare oder verzweigte Alkyl-, Alkoxy-, Cycloalkyl-, Cycloalkoxy-, Aryl- oder Aryloxygruppe und
- R⁴: eine lineare oder verzweigte Alkyl-, Alkoxy-, Cycloalkyl-, Cycloalkoxy-, Aryl- oder Aryloxygruppe
sind, wobei R³ und R⁴ auch zu einem cyclischen System verbunden sein können;
- m: eine ganze Zahl von > 1;
- X: eine n + m -wertige phosphorhaltige Gruppierung ist.

Die vorgeschlagenen flammhemmenden Polymere besitzen eine Flammschutzwirkung durch Ihre funktionalisierten Seitenketten, die phosphorhaltige Gruppierungen tragen, die ihrerseits phosphorhaltige Gruppen, wie zum Beispiel Phosphinate, Phosphate oder Phosphonate etc., enthalten. Bevorzugt handelt es sich dabei um unterschiedliche phosphorhaltige Gruppen, d.h. mit unterschiedlichen Oxidationszuständen des Phosphoratoms, die zusammen in dem Polymer vereint werden. Dadurch wird ein Synergismus zwischen diesen unterschiedlichen phosphorhaltigen Gruppen ermöglicht. Die unterschiedlichen Oxidationsstufen der phosphorhaltigen Gruppe innerhalb der Gruppierung B können durch die Wahl der Reste R³ sowie R⁴ realisiert werden. Die phosphorhaltige Gruppierung X könnte dabei sowohl eine phosphorhaltige Gruppe, wie z.B. ein Phosphat, sein, es könnte sich hierbei aber auch um eine Phosphazengruppe oder um eine spirozyklische Verbindung umfassend zwei Phosphatestergruppen handeln.

Darüberhinaus besitzen die flammhemmenden Polymere a priori aufgrund ihrer polymeren Struktur im Vergleich zu ihren niedermolekularen Analoga oder Derivaten dieser Analoga keine oder eine signifikant herabgesetzte Neigung zur Migration in Kunststoffen, in denen sie zur flammschützenden Wirkung eingetragen werden. Dies stellt einen erheblichen Vorteil von flammhemmenden Polymeren gegenüber niedermolekularen flammhemmenden Verbindungen dar.

Eine bevorzugte Variante des erfindungsgemäßen flammhemmenden Polymers zeichnet sich dadurch aus, dass 1 ≤ n ≤ 5 sowie 1 ≤ m ≤ 5 ist.

Für den Fall, dass n = 1 oder n = 2, handelt es sich bei dem erfindungsgemäßen flammhemmenden Polymer um ein lineares Polymer; für den Fall, dass n > 2, ist das flammhemmende Polymer verzweigt strukturiert. Verzweigt strukturierte Variationen der erfindungsgemäßen flammhemmenden Polymere sind unter Umständen besonders vorteilhaft, da sie aufgrund ihrer verbesserten Löslichkeitseigenschaften gegenüber den linear strukturierten Variationen in dem zu flammschützenden Kunststoff eine verbesserte Kompatibilität mit dem zu flammschützenden Kunststoff ermöglichen. Darüberhinaus kann auf diese Weise die Gesamtbeladung an Flammschutzmittel in Kunststoffmatrix deutlich gesenkt werden.

Die innerhalb des definierten Bereichs höheren Werte für m realisieren eine größere Konzentration der Gruppierung B pro flammhemmendes Polymer und damit auch eine größere Konzentration an phosphorhaltigen Gruppen. Dadurch kann die Gesamtbeladung an Flammschutzmittel in Kunststoffmatrix deutlich gesenkt werden.

Eine weitere bevorzugte Variante des erfindungsgemäßen flammhemmenden Polymers zeichnet sich dadurch aus, dass die Summe der Variablen n + m ≤ 10, vorzugsweise n + m ≤ 6, ist.

Für innerhalb der definierten Bereiche höheren Werte für n + m wären beispielsweise Phosphazen-basierte Systeme für X denkbar. Die Summe der Variablen n sowie m würde sich hierbei zu 6 ergeben. Somit wäre ein flammhemmendes Polymer erreichbar, für welches sich der Verzweigungsgrad sowie die Konzentration der Gruppierungen B einstellen ließen. Demnach kann ein solches System an die zu flammschützende Kunststoffmatrix angepasst werden, wodurch einerseits eine optimale Flammschutzwirkung erzielt werden kann ohne andererseits die Materialeigenschaften des Kunststoffs maßgeblich zu beeinflussen.

Eine weitere bevorzugte Variante des erfindungsgemäßen flammhemmenden Polymers zeichnet sich dadurch aus, dass X eine Gruppierung ist der Gruppe mit den folgenden Formeln: 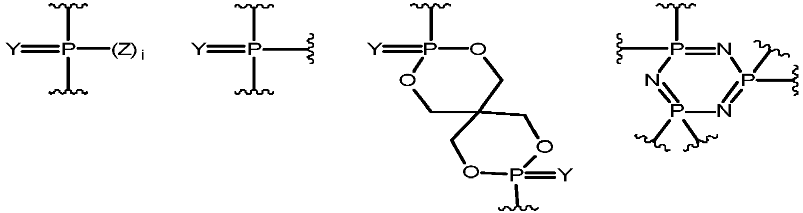 mit
- Z: O, NH

- i: 0 oder 1.

Die somit vorgeschlagenen Gruppierungen ermöglichen es, verschiedene phosphorhaltige Gruppen mit unterschiedlicher chemischer Umgebung in einer Struktur bzw. einem flammhemmenden Polymer zu vereinen, wodurch diese somit sowohl gas- als auch festphasenakitv sind und letztlich eine verbesserte Flammschutzwirkung ermöglichen. Zudem wird die Flammschutzwirkung durch synergistische Effekte durch Kombination mit den phosphorhaltigen Gruppen der Gruppierung B weiter gesteigert.

Eine weitere bevorzugte Variante des erfindungsgemäßen flammhemmenden Polymers zeichnet sich dadurch aus, dass B eine Gruppierung ist der Gruppe mit den folgenden Formeln:

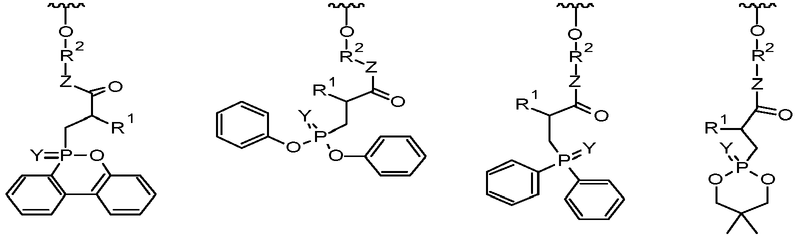

Die somit vorgeschlagenen Gruppierungen ermöglichen es, verschiedene phosphorhaltige Gruppen mit unterschiedlicher chemischer Umgebung in einer Struktur bzw. einem flammhemmenden Polymer zu vereinen, wodurch diese somit sowohl gas- als auch festphasenakitv sind und letztlich eine verbesserte Flammschutzwirkung ermöglichen. Zudem wird die Flammschutzwirkung durch synergistische Effekte durch Kombination mit den phosphorhaltigen Gruppen der Gruppierung X weiter gesteigert.

Eine weitere bevorzugte Variante des erfindungsgemäßen flammhemmenden Polymers zeichnet sich dadurch aus, dass das flammhemmende Polymer ein M_{w} von > 1000 g mol⁻¹, bevorzugt ein M_{w} im Bereich von 2500 g mol⁻¹ bis 300 000 g mol⁻¹, aufweist.

Der bevorzugte Polymerisationsgrad liegt bevorzugt im Bereich von 1 bis 100; aufgrund der zum Teil hohen Molekulargewichte der entsprechenden Monomere, ergeben sich folglich für die flammhemmenden Polymere unterschiedliche Molmassenbereiche, die wiederrum je nach Anwendungsfall, d.h. des zu flammschützenden Kunststoffs, entsprechend angepasst werden können.

Eine weitere bevorzugte Variante des erfindungsgemäßen flammhemmenden Polymers zeichnet sich dadurch aus, dass
- A: ein polymerer Rest ist, der zusätzlich zur Wiederholungseinheit gemäß Formel II mindestens eine Wiederholungseinheit gemäß Formel IV umfasst 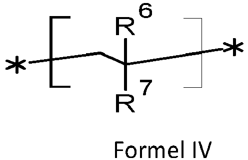
mit
- R⁶: Wasserstoff (H) oder eine Alkylgruppe;
und
- R⁷: ausgewählt aus der Gruppe mit den folgenden Formeln:
, wobei Z sowie R⁸ 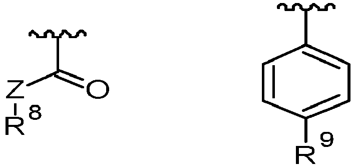 wie zuvor definiert und R⁹ jeweils unabhängig voneinander Wasserstoff (H) oder eine Alkylgruppe ist.

Die somit zusätzlich eingeführte Wiederholungseinheit eröffnet die Möglichkeit Copolymere zugänglich zu machen. Die dabei vorgeschlagenen Strukturen dieser zusätzlichen Wiederholungseinheiten, d.h. Comonomere, können unterschiedlicher Natur sein; es kann sich sowohl um acrylische (Acrylate, Methacrylate, Acrylamide, Methacrylamide, etc.) als auch um styrenische Monomere handeln. Der Einbau dieser Comonomere in das Polymerrückgrat ermöglicht dabei flammhemmende Copolymere, für die höhere Molekulargewichte zugänglich sind. Die zum Teil sterisch anspruchsvollen Wiederholungseinheiten gemäß Formel II würden mit hoher Wahrscheinlichkeit ohne den Zusatz der hier vorgeschlagenen Comonomere eher zu Abbruchsreaktionen während der Polymerisation und damit zu geringeren Molekulargewichten neigen. Darüberhinaus können durch die Wahl des Comonomers bzw. der Wiederholungseinheit gemäß Formel IV Copolymere synthetisiert werden die in Bezug auf dieses Comonomer chemisch-strukturelle Ähnlichkeiten gegenüber den Wiederholungseinheiten des zu schützenden Kunststoffs aufweisen. Die Kompatibilität dieses flammhemmenden Copolymers mit dem zu schützenden Kunststoff könnte somit maßgeblich verbessert werden.

Eine weitere bevorzugte Variante des erfindungsgemäßen flammhemmenden Polymers zeichnet sich dadurch aus, dass der molare Anteil der Wiederholungseinheit gemäß Formel II, bezogen auf die Summe der Wiederholungseinheiten gemäß Formel II sowie Formel IV, 0,01 bis 0,99; bevorzugt 0,1 bis 0,6 und besonders 0,2 bis 0,5 beträgt.

Durch entsprechende Optimierung der Reaktionsbedingungen sind im Falle derartiger Copolymerisationen gewünschte Comonomerzusammensetzungen variabel einstellbar. Hohe Konzentrationen an flammschutzaktiven Gruppierungen sind somit weiterhin zugänglich.

Die vorliegende Erfindung betrifft auch eine Flammschutz-Zusammensetzung enthaltend
a) 99 - 1 Gew.-%, bevorzugt 90 - 10 Gew.-%, besonders bevorzugt 70 - 30 Gew.-% mindestens eines erfindungsgemäßen flammhemmenden Polymers;
b) 1- 99 Gew.-%, bevorzugt 10 - 90 Gew.-%, besonders bevorzugt 30 - 70 Gew.-% einer weiteren Verbindung mit flammhemmenden Eigenschaften;
jeweils bezogen auf die Gesamtmenge der Flammschutz-Zusammensetzung, wobei sich die Summe der Gewichtsanteile der einzelnen Komponenten auf 100 Gew.-% ergänzt.

Die erfindungsgemäßen flammhemmenden Polymere gewährleisten einen effizienten Flammschutz und zeigen eine bessere Performance als bereits erhältliche Flammschutzmittel. Die eine weitere Verbindung mit flammhemmenden Eigenschaften kann als Synergist verstanden werden, wodurch durch die Kombination der beiden Inhaltsstoffe a) sowie b) der Flammschutz-Zusammensetzung ein Synergismus erreicht und die flammhemmende Wirkung der phosphorhaltigen Polymere weiter verbessert werden kann. Hierzu eignen sich neben:
a) anorganische Flammschutzmittel und/oder mineralische Flammschutzmittel, wie z.B. Al(OH)₃, Mg(OH)₂, AlO(OH), Schichtsilikate wie z. B. Montmorillonit, nicht oder organisch modifiziert, Doppelsalze, wie z. B. Mg-Al-Silikate, POSS(Polyhedral Oligomeric Silsesquioxane)-Verbindungen, Huntit, Hydromagnesit oder Halloysit;
   auch
b) stickstoffhaltige oder phosphorhaltige Verbindungen, wie z.B. roter Phosphor, Borphosphat, Stickstoffbasen, Melaminderivate, Phosphate, wie z. B. Resorcindiphosphat, Bisphenol-A-diphosphat und ihre Oligomere, Triphenylphosphat, Pyrophosphate, Polyphosphate, organische und anorganische Phosphinate, wie z. B. Salze derhypophosphorigen Säure und Ihrer Derivate wie Diethylaluminiumphosphinat oder Aluminiumphosphinat, organische und anorganische Phosphonate und Derivate der vorgenannten Verbindungen, Ammoniumpolyphosphat (APP), mit Melamin, Melaminharz, Melaminderivaten, Silanen, Siloxanen, Silikonen oder Polystyrolen beschichtete und/oder beschichtete und vernetzte Ammoniumpolyphosphatpartikel, 9,10-Dihydro-9-oxa-10-phos-phorylphenanthren-10-oxid (DOPO) und deren substituierte Verbindungen, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze und -addukte, Melamincyanurat, Melaminborat, Melaminorthophosphat, Melaminpyrophosphat, Dimelaminpyrophosphat, Aluminiumdiethylphosphinat, Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Dipentaerythritol, 1,3,5-Trihydroxyethylisocyanurat, 1,3,5-Triglycidylisocyanurat, Triallylisocyanurat und Derivate der vorgenannten Verbindungen. Bevorzugt enthält die Flammschutz-Zusammensetzung für eine bessere Dispergierbarkeit weitere Verbindungen mit flammhemmenden Eigenschaften, wie z.B. Wachse, Silikone, Siloxane, Fette oder Mineralöle.

Die vorliegende Erfindung betrifft auch eine Kunststoffzusammensetzung enthaltend
a) 65 bis 99,95 Gew.-% mindestens eines Polymers oder Polymerblends;
b) 0,05 bis 30 Gew.-% mindestens eines der erfindungsgemäßen flammhemmenden Polymere;
c) 0 bis 30 Gew.-% einer weiteren Verbindung mit flammhemmenden Eigenschaften;
d) 0 bis 70 Gew.-% mindestens eines Füll- und/oder Verstärkungsstoffes
e) 0 bis 20 Gew.-% mindestens eines Additivs;
jeweils bezogen auf die Gesamtmenge der Kunststoffzusammensetzung wobei sich die Summe der Gewichtsanteile der einzelnen Komponenten auf 100 Gew.-% ergänzt.

Die erfindungsgemäßen flammhemmenden Polymere gewährleisten einen effizienten Flammschutz und zeigen eine bessere Performance als bereits erhältliche Flammschutzmittel. Darüberhinaus kann es sich beispielsweise bei Inhaltsstoff c) der Kunststoffzusammensetzung, d.h. die weitere Verbindung mit flammhemmenden Eigenschaften, um Synergisten handeln, die die flammhemmende Wirkung der phosphorhaltigen Polymere verbessern. Hierzu eignen sich die zuvor genannten anorganischen Flammschutzmittel und/mineralischen Flammschutzmittel sowie die zuvor genannten stickstoffhaltigen oder phosphorhaltigen Verbindungen.

Geeignete Füllstoffe und Verstärkungsstoffe sind beispielsweise synthetische oder natürliche Materialien, wie z. B. Carbonate, insbesondere Calciumcarbonat oder Hydrotalcite, Silikate, insbesondere Schichtsilikate, wie z. B. Montmorillonit, Bentonit, Beidelit, Mica, Hectorit, Saponit, Vermiculit, Ledikit, Magadit, Illit, Kaolinit, Wollastonit, Attapulgit, und funktionalisierte Schichtsilikate wie Nanocomposite, Bentonit, Erdalkalimetallsilikate und Alkalimetallsilikate, Glasfasern, Glaskugeln (massiv oder hohl), Talkum, Talg, Ton, Glimmer, Kieselerde, Kaolin, Calciumsulfat, Bariumsulfat, Metalloxide und Metallhydroxide, insbesondere Erdalkalimetallhydroxide, Alkalimetallhydroxide und Aluminiumhydroxide, Böhmit, Ruß, Graphit, Kohlenstoffnanoröhrchen, Graphen, Holzmehl, Zellulosepulver, Fasern von Naturprodukten, wie z. B. Cellulose, oder synthetische Fasern oder Zeolithe. Alle aufgeführten Füllstoffe können sowohl in für Füllstoffe üblicher Form und Größe, die dem Fachmannbekannt sind, als auch in nanoskaliger Form, d.h. als Partikel mit einem durchschnittlichen Durchmesser im Bereich von ungefähr 1 bis ungefähr 200 nm, vorliegen und in den Kunststoffzusammensetzungen verwendet werden.

Bei dem mindestens einen Additiv handelt es sich um Zusatzstoffe, die ausgewählt sind aus der Gruppe bestehend aus UV-Absorbern, Lichtstabilisatoren, Stabilisatoren, wie der Benzofuranone oder der Hydroxylamine oder aus der Gruppe der phenolischen Antioxidantien und der Phosphite/Phosphonite, Metalldesaktivatoren, Füllstoffdesaktivatoren, Nukleierungsmitteln, Schlagzähigkeitsverbesserern, Weichmachern, Gleitmitteln, Rheologiemodifikatoren, Verarbeitungshilfsmitteln, Pigmenten, Farbstoffen, optische Aufhellern, antimikrobiellen Wirkstoffen, Antistatika, Slipmitteln, Antiblockmitteln, Kopplungsmitteln, Dispergiermitteln, Kompatibilisatoren, Sauerstofffängern, Säurefängern, Markierungsmitteln oder Antifoggingmitteln.

Lichtstabilisatoren sind beispielsweise ausgewählt aus der Gruppe der gehinderten Amine (HALS) oder Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete gehinderte Amine sind beispielsweise 1,1-Bis(2,2,6,6-tetramethyl-4-piperidyl)sebazat, Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperi-dyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl) hexamethylendiamin und 4-tert-Octylamino-2,6-di-chloro-1,3,5-triazin, Tris(2,2,6,6-tetramethyl-4-piperidyl) nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Steary-loxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorohydrin.

Geeignete 2-(2'-Hydroxyphenyl)benzotriazole sind beispielsweise 2-(2'-Hydroxy-5'methylphenyl)benzotriazol,2-(3',5'-Di-tert-butyl-2'-hydroxyphenyl)benzotriazol, 2-(5'-tert-Butyl-2'-hydroxy-phenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlorobenzotriazol,2-(3'-tert-Butyl-2'-hydroxy-5'-methylphenyl-5-chlorobenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonylethyl)phenyl)-5-chlorobenzotriazol, 2-(3'-tert-Butyl-5'-[2-(2-ethylhexyloxy)carbonylethyl]-2'-hydroxyphenyl)-5-chlorobenzotriazol, 2-(3'-tert-Butyl-2'-hydroxy-5'-(2-methoxycarbonylethyl)phenyl)-5-chlorobenzotriazol,2-(3'-tert-Butyl-2'-hydroxy-5'-(2-methoxycarbonylethyl)phenyl)benzotriazol, 2-(3'-tert-Butyl-2'-hydroxy-5'-(2-octyloxycarbonylethyl)phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-5'-(2-isooctyloxycarbonylethyl)phenylbenzotriazol, 2,2'-Methylenbis[4-(1,1,3,3-tetramethylbutyl)-6-benzotriazol-2-ylphenol]; das Produkt der Umesterung von 2-[3'-tert-Butyl-5'-(2-methoxycarbonylethyl)-2'-hydroxyphenyl]-2H-benzotriazol mit Polyethylenglycol 300; [R-CH2CH2-COO-CH2CH2-]-2, wobei R = 3'-tert-Butyl-4'- hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazolGeeignete 2-Hydroxybenzophenone sind beispielsweise 4-Hydroxy-, 4-Methoxy-, 4-Octyloxy-, 4-Decyloxy-4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat,Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-tert-Butylphenylsalicylat, Phenylsalicylat,Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-ditert-butyl-4-hydroxybenzoat, 2-Methyl-4,6-di-tert-butylphenyl-3,5-di-tert-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-tert-butoxanilid, 2,2'-didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und seine Mischungen mit 2-Ethoxy-2'-ethyl-5,4'-di-tert-butoxanilid, Mischungen von o- und p-Methoxydisubstituierten Oxaniliden und Mischungen von o- und p-Ethoxy-disubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl-1,3,5-triazin.

Geeignete phenolische Antioxidantien sind beispielsweise: Octadecyl-3-(3,5-di-tert-butyl-4-hydroxyphenyl)propionat, Pentaerythritol-tetrakis[3-(3,5-di-tert-butyl-4-hydroxyphenyl) propionat, Tris(3,5-di-tert-butyl-4-hydroxyphenyl)isocyanurat, 1,3,5-Trimethyl-2,4,6-tris(3,5-ditert-butyl-4-hydroxybenzyl)benzol, Triethylenglycol-bis[3-(3-tert-butyl-4-hydroxy-5-methylphenyl)propionat, N,N'-Hexan-1,6-diyl-bis[3-(3,5-di-tert-butyl-4-hydroxyphenyl)propionsäureamid.

Geeignete Phosphite/Phosphonite sind beispielsweise: 3,9-Bis(2,4-ditert-butylphenoxy)-2,4,8,10-tetraoxa-3,9-diphosphaspiro[5.5]undecan, Triphenylphosphit, Diphenylalkylphosphite, Phenyldialkylphosphite, Tri(nonylphenyl)phosphit, Trilaurylphosphite,Trioctadecylphosphit, Distearylpentaerythritoldiphosphit, Tris-(2,4-di-tert-butylphenyl)phosphit, Diisodecylpentaerythri-toldiphosphit,Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit,Bis(2,4-di-tert-butyl-6-methylphenyl)pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit,6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2'2"-Nitrilo[triethyltris(3,3",5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl))phosphit, 5-Butyl-5-ethyl-2-(2,4,6-tri-tert-butylphenoxy)-1,3,2-dioxaphosphiran.

Geeignete Metalldesaktivatoren sind beispielsweise N,N'-Diphenyloxamid, N-Salicylal-N'-salicyloylhydrazin,N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbi-sphenylhydrazid,N,N'-Diacetyladipoyldihydrazid, N,N'-Bis(salicy-loyl)oxylyldihydrazid, N,N'-Bis(salicyloyl)thiopropionyldihydrazid.

Geeignete Füllstoffdesaktivatoren sind beispielsweise Epoxide wie z. B. Bisphenol-A-diglycidylether,Polysiloxane, Polyacrylate insbesondere Blockcopolymere wie Polymethacrylsäure-polyalkylenoxid.

Geeignete Nukleierungsmittel sind beispielsweise Talkum, Alkali oder Erdalkalisalze von mono- und polyfunktionellen Carbonsäuren wie z. B. Benzoesäure, Bernsteinsäure, Adipinsäure, z. B. Natriumbenzoat,Zinkglycerolat, Aluminiumhydroxy-bis(4-tert-butyl)benzoat, Benzylidensorbitole wie z. B. 1,3:2,4-Bis(Benzyliden)sorbitol oder 1,3:2,4-Bis(4-Methylbenzyliden)sorbitol, 2,2'-Methylen-bis-(4,6-di-tert-butylphenyl)phosphat,sowie Trisamide.

Geeignete Pigmente können anorganischer oder organischer Natur sein. Anorganische Pigmente sind

Eine bevorzugte Variante der erfindungsgemäßen Kunststoffzusammensetzung zeichnet sich dadurch aus, dass das mindestens eine Polymer ein thermoplastisches Polymer ist bevorzugt ausgewählt aus der Gruppe bestehend aus Polyolefinen, Polyamiden, Polyestern, besonders bevorzugt Polylactiden, und Kombinationen hieraus.

Prinzipiell ist das erfindungsgemäße flammhemmende Polymer in Funktion als Flammschutzmittelzusatz jedoch für beliebige Kunststoffmatrizen verwendbar, in denen im gewählten Verarbeitungsverfahren das Flammschutzmittel ohne vorherige Zersetzung desselben eingebracht werden kann. Der Kunststoff kann demnach ausgewählt sein aus der Gruppe bestehend aus thermoplastischen, elastomeren oder duroplastischen Kunststoffen:
a) Polymere aus Olefinen oder Diolefinen wie z. B. Polyethylen (LDPE, LLDPE, VLDPE, ULDPE, MDPE,HDPE, UHMWPE), Metallocen-PE (m-PE), Polypropylen, Polyisobutylen, Poly-4-methyl-penten-1, Polybutadien,Polyisopren, Polycycloocten, Polyalkylen-Kohlenmonoxid-Copolymere, sowie Copolymere in Formvon statistischen oder Blockstrukturen wie z. B. Polypropylen-Polyethylen (EP), EPM oder EPDM, Ethylen-Vinylacetat (EVA), Ethylen-Acrylester, wie z. B. Ethylen-Butylacrylat, Ethylen-Acrylsäure und deren Salze(lonomere), sowie Terpolymere wie z. B. Ethylen-Acrylsäure-Glycidylacrylat, Pfropfpolymere wie z. B. Polypropylen-g-Maleinsäureanhydrid, Polypropylen-g-Acrylsäure, Polyethylen-g-Acrylsäure,
b) Polystyrol, Polymethylstyrol, Polyvinylnaphthalin, Styrol-Butadien (SB), Styrol-Butadien-Styrol (SBS),Styrol-Ethylen-Butylen-Styrol (SEBS), Styrol-Ethylen-Propylen-Styrol, Styrolisopren, Styrol-Isopren-Styrol(SIS), Styrol-butadien-acrylnitril (ABS), Styrol-acrylnitril-acrylat (ASA), Styrol-Ethylen, Styrol-Maleinsäureanhydrid-Polymere einschl. entsprechender Pfropfcopolymere wie z. B. Styrol auf Butadien, Maleinsäureanhydridauf SBS oder SEBS, sowie Pfropfcopolymere aus Methylmethacrylat, Styrol-Butadien und ABS(MABS),
c) halogenenthaltende Polymere wie z. B. Polyvinylchlorid (PVC), Polychloropren und Polyvinylidenchlorid(PVDC), Copolymere aus Vinylchlorid und Vinylidenchlorid oder aus Vinylchlorid und Vinylacetat, chloriertesPolyethylen, Polyvinylidenfluorid,
d) Polymere von ungesättigten Estern wie z. B. Polyacrylate und Polymethacrylate wie Polymethylmethacrylat(PMMA), Polybutylacrylat, Polylaurylacrylat, Polystearylacrylat, Polyacrylnitril, Polyacrylamide, Copolymerewie z. B. Polyacrylnitril-Polyalkylacrylat,
e) Polymere aus ungesättigten Alkoholen und Derivaten, wie z. B. Polyvinylalkohol, Polyvinylacetat, Polyvinylbutyral,
f) Polyacetale, wie z. B. Polyoxymethylen POM) oder Copolymere mit z. B. Butanal,
g) Polyphenylenoxide und Blends mit Polystyrol oder Polyamiden,
h) Polymere von cyclischen Ethern wie z. B. Polyethylenglycol, Polypropylenglycol, Polyethylenoxid, Polypropylenoxid,
i) Polyurethane, aus hydroxyterminierten Polyethern oder Polyestern und aromatischen oder aliphatischenlsocyanaten insbesondere lineare Polyurethane, Polyharnstoffe,
j) Polyamide wie z. B. Polyamid-6, 6.6, 6.10, 4.6, 4.10, 6.12, 12.12, Polyamid 11, Polyamid 12 sowie (teil-)aromatische Polyamide wie z. B. Polyphthalamide, z. B. hergestellt aus Terephthalsäure und/oder Isophthalsäureund aliphatischen Diaminen oder aus aliphatischen Dicarbonsäuren wie z. B. Adipinsäure oder Sebazinsäure und aromatischen Diaminen wie z. B. 1,4- oder 1,3-Diaminobenzol,
k) Polyester aus aliphatischen oder aromatischen Dicarbonsäuren und Diolen oder aus Hydroxy-Carbonsäurenwie z. B. Polyethylenterephthalat (PET), Polybutylenterephthalat (PBT), Polypropylenterephthalat, Polyethylennaphthylat,Poly-1,4-dimethylolcyclohexanterephthalat, Polyhydroxybenzoat, Polyhydroxynaphthalat, Polymilchsäure,
l) Polycarbonate, Polyestercarbonate, sowie Blends wie z. B. PC/ABS, PC/PBT, PC/PET/PBT,
m) Cellulosederivate wie z. B. Cellulosenitrat, Celluloseacetat, Cellulosepropionat, Cellulosebutyrato) sowie Mischungen, Kombinationen oder Blends aus zwei oder mehr der zuvor genannten Polymere.

Die vorgeschlagenen flammhemmenden Polymere weisen hohe Zersetzungstemperaturen auf, wodurch sie beispielsweise für die Anwendung sowohl in (Co)Polyestern als auch in Polyamiden, vor dem Hintergrund der für diese Kunststoffe üblichen hohen Verarbeitungstemperaturen von bis 280 °C, geeignet sind.

Die vorliegende Erfindung betrifft auch ein Verfahren zur Herstellung des flammhemmenden Polymers, bei welchem
a) mindestens eine Phosphorverbindung der allgemeinen Formel V

   X-Mₘ₊ₙ Formel V

   mit mindestens n+m Äquivalenten mindestens einer α,β-ungesättigten Carbonylverbindung der allgemeinen Formel VI 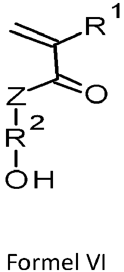 zu mindestens einem Addukt der allgemeinen Formel VII 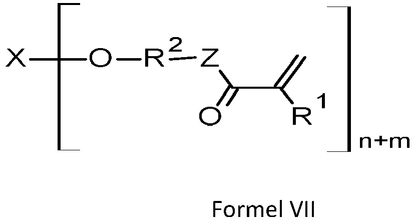 umgesetzt wird,
   wobei X, m, n, Z, R¹ und R² wie in zuvor definiert ist sowie mit
   M Halogen-oder Alkoxygruppe;
b) das mindestens eine Addukt aus Schritt a) mit n+m-x Äquivalenten mindestens einer Organophosphorverbindung der allgemeinen Formel VIII 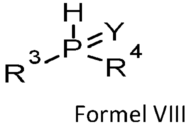 umsetzt wird,
   wobei R³ und R⁴ wie zuvor definiert sind; und das mindestens eine Addukt aus Schritt a) sowie die mindestens eine Organophosphorverbindung geeignet sind in einer Phospha-Michael Addition miteinander zu reagieren
   und x im Bereich von 0,5 bis 1,5; bevorzugt im Bereich von 0,75 bis 1,25 und besonders bevorzugt im Bereich von 0,9 bis 1,1; liegt;
c) das mindestens eine Addukt aus Schritt b)
   oder
   das mindestens eine Addukt aus Schritt b) sowie mindestens ein weiteres radikalisch polymerisierbares Monomer der allgemeinen Formel IX 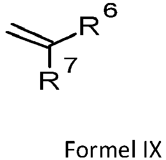
   , wobei R⁶ und R⁷ wie zuvor definiert ist, polymerisiert wird.

Bei der in Verfahrensschritt a) mit mindestens einer Phosphorverbindung der allgemeinen Formel V umgesetzten α,β-ungesättigten Carbonylverbindung handelt es sich um ein Hydroxy(meth)acrylat oder Hydroxy(meth)acrylamid, wie z.B. 2-Hydroxyethylacrylat. Dieses 2-Hydroxyethylacrylat, das über biobasierte Edukte zugänglich ist, ist für die Synthese der vorgeschlagenen Verbindungen auch aus ökologischer Sicht vorteilhaft. In diesem Zusammenhang wäre es auch denkbar, dass es sich bei der mindestens einen Phosphorverbindung der allgemeinen Formel V um Pentaerythritoldiphosphatdichlorid handelt, wodurch der Bioanteil der flammhemmenden Polymere weiter erhöht werden kann.

Bei der mindestens einen Organophosphorverbindung der allgemeinen Formel VIII kann es sich beispielsweise um 9,10-Dihydro-9-oxa-10-phospha-phenanthren-10-oxid (DOPO) handeln, welches ein häufig verwendetes Edukt für die Herstellung phosphorhaltiger Flammschutzmittel darstellt.

Wird die mindestens eine Organophosphorverbindung in Verfahrensschritt b) im leichten Überschuss eingesetzt, werden thermoplastische Polymere erhalten, da auf diese Weise eine nahezu, aber dennoch nicht quantitative Umsetzung der Doppelbindungen des mindestens einen Addukts der allgemeinen Formel VII realisiert wird. Die verbleibenden Doppelbindungen werden durch die Polymerisation in Verfahrensschritt c) schließlich vollständig umgesetzt und bilden ein lineares Polymer. Wird im Gegensatz dazu ein Unterschuss der mindestens eine Organophosphorverbindung eingesetzt, werden für den Fall, dass n+m darauf verzichtet werden duromere Polymere erhalten.

Die Polymerisation in Verfahrensschritt c) kann beispielsweise radikalisch erfolgen.

Eine bevorzugte Variante des erfindungsgemäßen Verfahrens zeichnet sich dadurch aus, dass die mindestens eine phosphorhaltige Verbindung, die in Schritt a) eingesetzt wird, mit X definiert ist, wobei X ausgewählt ist aus Gruppe der Verbindungen mit den folgenden Formeln: 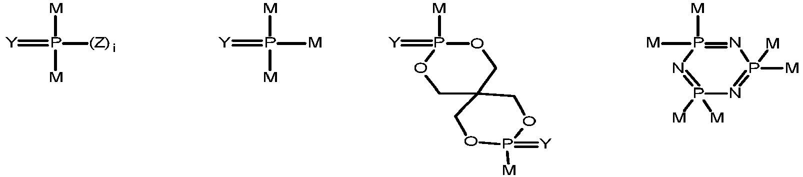 , wobei Z und i wie in zuvor definiert ist.

Die vorgeschlagenen Reagenzien enthalten bevorzugte phosohorhaltige Gruppierungen und ermöglichen es somit, verschiedene phosphorhaltige Gruppen mit unterschiedlicher chemischer Umgebung in einer Struktur bzw. den erfindungsgemäßen flammhemmenden Polymeren zu vereinen, wodurch diese sowohl gas- als auch festphasenakitv sind und letztlich eine verbesserte Flammschutzwirkung gewährleisten. Dies wird erreicht durch die Multifunktionalität der Reagenzien, die es erlaubt neben den phosphorhaltigen Gruppen mindestens eine polymerisierbare Gruppe einzuführen.

Eine weitere bevorzugte Variante des erfindungsgemäßen Verfahrens zeichnet sich dadurch aus, dass die mindestens eine Organophosphoverbindung, die in Schritt b) eingesetzt wird, ausgewählt ist aus Gruppe der Verbindungen mit den folgenden Formeln:

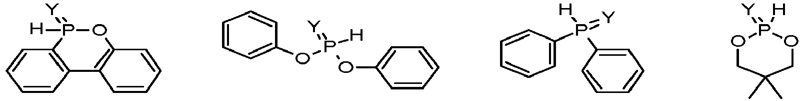

Die vorgeschlagenen Reagenzien Gruppierungen enthalten bevorzugte phosohorhaltige Gruppierungen und ermöglichen es somit, verschiedene phosphorhaltige Gruppen mit unterschiedlicher chemischer Umgebung in einer Struktur bzw. einem flammhemmenden Polymer zu vereinen, wodurch diese somit sowohl gas- als auch festphasenakitv sind und letztlich eine verbesserte Flammschutzwirkung ermöglichen. Diese Verbindungen eignen sich für eine Phospa-Michael Addition an ungesättigte Verbindungen (z.B. Ester oder Amide), wobei die Phospa-Michael Additionen in hohen Ausbeuten und ohne Nebenreaktionen ablaufen.

Eine weitere bevorzugte Variante des erfindungsgemäßen Verfahrens zeichnet sich dadurch aus, dass die mindestens eine Phosphorverbindung in Schritt a) bevorzugt mit 2-Hydroxyethylacrylat umgesetzt wird.

2-Hydroxyethylacrylat ist über biobasierte Edukte zugänglich und somit für die Synthese der vorgeschlagenen Verbindungen auch aus ökologischer Sicht vorteilhaft, da auf diese Weise der Biokohlenstoffgehalt der flammhemmenden Polymere erhöht werden kann.

Die vorliegende Erfindung betrifft auch die Verwendung des flammhemmenden Polymers hergestellt nach dem erfindungsgemäßen Verfahren als Flammschutzmittel.

Die erfindungsgemäßen flammhemmenden Polymere eignen sich besonders als Flammschutzmittel, da diese verschiedene phosphorhaltige Gruppen mit unterschiedlicher chemischer Umgebung in einer Struktur vereinen und somit sowohl gas-, als auch festphasenaktiv sind.

Eine bevorzugte Variante der Verwendung des erfindungsgemäßen flammhemmenden Polymers zeichnet sich dadurch aus, dass das flammhemmende Polymer als Flammschutzmittel für Kunststoffe oder Lederapplikationen verwendet wird.

Durch die verschiedenen phosphorhaltigen Gruppen innerhalb der flammhemmenden Polymere weisen diese einen inhärenten Synergismus auf. Darüberhinaus neigen die FSM auf Grund ihrer polymeren Struktur weder zur Migration noch beeinflussen sie die Materialeigenschaften der Zielmatrizen negativ.

Eine weitere bevorzugte Variante der Verwendung des erfindungsgemäßen flammhemmenden Polymers zeichnet sich dadurch aus, dass es sich bei den Kunststoffen um (Co)Polyester, Polyolefine, Polyamide und Kombinationen hiervon handelt.

Bei den vorgeschlagenen Kunststoffen kann es sich um allgemein technische Kunststoffe sowie um biobasierte Kunststoffe wie PLA handeln.

Anhand der nachfolgenden Beispiele und der Figur soll die vorliegende Erfindung näher erläutert werden, ohne diese auf die hier gezeigten spezifischen Ausführungsformen und Parameter zu beschränken.

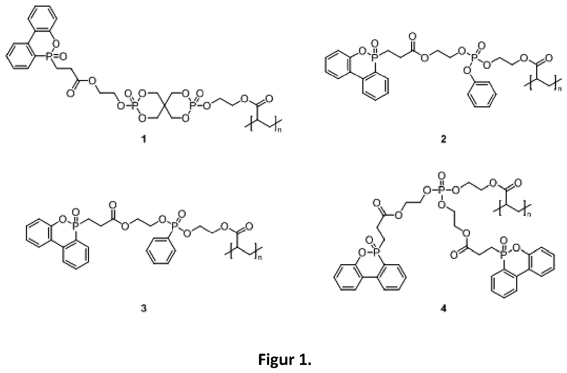

Fig. 1 zeigt dabei die chemischen Strukturen der flammhemmenden Polymere FSM 1-4, die nach dem erfindungsgemäßen Verfahren synthetisiert wurden.

### Ausführungsbeispiel:

### Synthese des FSM 1:

### a) Reaktion eines Hydroxyacrylats mit Phosphorspezies

Es werden 270.0 g des spirozyklischen Phosphatesters (SPDPC) (909.2 mmol, 1.0 Äq.), 211.2 g 2-Hydroxyethylacrylat (1.82 mol, 2.0 Äq.), 9.7 g Aluminiumchlorid (72.7 mmol, 0.05 Äq.) und 1.4 L trockenes Acetonitril vorgelegt. Unter Schutzgasatmosphäre werden 253.5 mLTriethylamin (1.82 mol, 2.0 Äq.) langsam zugetropft, während das Reaktionsgemisch im Eis-Wasser-Bad gekühlt wird. Anschließend wird über Nacht bei Raumtemperatur gerührt. Das Lösungsmittel wird am Rotationsverdampfer entfernt. Der Rückstand wird in Dichlormethan gelöst und jeweils einmal mit Wasser, gesättigter Natriumhydrogencarbonat-Lösung und gesättigter Natriumchlorid-Lösung extrahiert. Die Phasen werden getrennt und das Dichlormethan am Rotationsverdampfer entfernt. Es werden 347 g Diacrylat (760 mmol, 84%) als weißer Feststoff erhalten.

### b) Phospha-Michael Addition von DOPO an das Addukt aus Schritt a)

250.8 g des Diacrylats (459.7 mmol, 1.0 Äq.) werden vorgelegt und in 650 mL trockenem Acetonitril gelöst. Es werden 38.1 mL Triethylamin (274.9 mmol, 0.5 Äq.) hinzugefügt und auf 85 °C erhitzt. 113.4 g DOPO (514.9 mmol, 1.1 Äq.) werden portionsweise zugegeben. Nach zwei Stunden wird das Lösungsmittel am Rotationsverdampfer entfernt. Der Rückstand wird in DCM gelöst und es wird mit Wasser, gesättigter Natriumhydrogencarbonat-Lösung und gesättigter Natriumchlorid-Lösung extrahiert. Nach Entfernen des Lösungsmittels am Rotationsverdampfer wird das Produkt als weißer Feststoff mit einer Ausbeute von 84% (456.2 mmol, 306.8 g) isoliert.

### c) Polymerisation des Monomers aus Schritt b)

25.1 g des Monomers, 150 mL Acetonitril und 3.7 mL AIBN in Toluol (0.4 mmol, 0.01 Äq.) werden zwei Stunden unter Schutzgasatmosphäre refluxiert. Anschließend wird das Produkt abfiltriert und im Ofen unter Vakuum getrocknet. Das Polymer wird mit einer Ausbeute von 97% als weißes Pulver isoliert.

### Synthese des FSM 2:

Es werden 150 g Dichlorophenylphosphinoxid (0.77 mol, 1.0 Äq.) und 178.7 g 2-Hydroxyethylacrylat (1.54 mol, 2.0 Äq.) in trockenem Toluol (1 L) vorgelegt. Anschließend werden unter Schutzgasatmosphäre 155.7 g Triethylamin (1.54 mol, 2.0 Äq.) langsam zugetropft, während das Reaktionsgemisch im Eis-Wasser-Bad gekühlt wird. Nach 2 h Rühren bei Raumtemperatur wird mit Wasser gewaschen (500 mL) und die Phasen werden getrennt. Die Wasserreste in der organischen Phase werden über azeotroper Destillation entfernt. 170 g DOPO (0.786 mmol, 1.02 Äq.) und 7.78 g Triethylamin (76.9 mmol, 0.1 Äq.) werden hinzugegeben und die Reaktionslösung für 5 h auf 90 °C erhitzt. Nach Einleiten von Schutzgas werden 38.47 mL AIBN in Toluol (0.2 M, 7.69 mmol, 0.01 Äq.) hinzugegeben und die Reaktionslösung für weitere 3 h gerührt. Das Lösungsmittel wird abdekantiert und der erhaltene hochviskose Rückstand im Vakuum bei 100 °C getrocknet. Das getrocknete Produkt wird fein vermahlen und es wird ein weißer Feststoff mit einer Ausbeute von 410 g (89%) erhalten.

Die FSM 2-4 können über diese vereinfachte Reaktionsführung hergestellt werden. Auf Grund der geringen Löslichkeit der Zwischenprodukte bei der Herstellung des FSM 1 ist dies in jenem Fall nicht möglich.

### Herstellung der UL94-Prüfkörper und Flammtests:

Zur Herstellung der flammgeschützten Kunststoffzusammensetzungen wurde ein PLA (Ingeo 3251 von NatureWorks) verwendet. Die Zusammensetzungen wurden an einem Walzwerk hergestellt, granuliert und in einer Heißpresse zu normgerechten Prüfkörpern verarbeitet. Der Flammschutztest wurde nach IEC/DIN EN 60695-11-10 durchgeführt.

Die Ergebnisse des Tests zeigen, dass die FSM 1-4 eine deutlich bessere Flammschutzwirkung in PLA erzielen als gängige kommerzielle FSM (siehe Tabelle 1). In den Vergleichsversuchen wurde selbst in synergistischen Formulierungen nur eine V-2 Klassifizierung erreicht. Zusammensetzungen mit FSM 1-4 bei einer gleichen Gesamtbeladung erreichen eine bessere Klassifizierung im UL94-Test.

**Tabelle 1: Ergebnisse des Flammschutztests von PLA mit Ukanol FR80, FSM 1-4 und Synergist.**

| Versuchs-Nr. | PLA (wt%) | FSM A | FSM A -Gehalt (wt%) | FSM B | FSM B - Gehalt (wt%) | UL94 |
|---|---|---|---|---|---|---|
| Ref. 1 | 100 | | - | - | - | V-2 |
| Ref. 2 | 90 | Ukanol FR80 | 10 | - | - | V-2 |
| Ref. 3 | 90 | APP | 10 | - | - | V-2 |
| Ref. 4 | 90 | Ukanol FR80 | 2 | APP | 8 | V-2 |
| Ref. 5 | 90 | Sol-DP | 2 | APP | 8 | V-2 |
| Ex. 1 | 90 | FSM 1 | 10 | - | - | V-0 |
| Ex. 2 | 90 | FSM 2 | 10 | - | - | V-0 |
| Ex. 3 | 90 | FSM 3 | 10 | - | - | V-0 |
| Ex. 4 | 95 | FSM 3 | 5 | - | - | V-0 |
| Ex. 5 | 90 | FSM 3 | 2 | APP | 8 | V-0 |
| Ex. 6 | 91 | FSM 3 | 1 | APP | 8 | V-0 |
| Ex. 7 | 92 | FSM 3 | 2 | APP | 6 | V-0 |
| Ex. 8 | 93 | FSM 3 | 1 | APP | 6 | V-0 |
| Ex. 9 | 94 | FSM 3 | 2 | APP | 4 | V-0 |
| Ex. 10 | 95 | FSM 3 | 1 | APP | 4 | V-0 |
| Ex. 11 | 90 | FSM 4 | 10 | - | - | V-0 |
| Ex. 12 | 90 | FSM 4 | 2 | APP | 8 | V-0 |

## Patentansprüche

1. Flammhemmendes Polymer umfassend phosphorhaltige Wiederholungseinheiten der allgemeinen Formel I 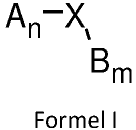 , wobei die Variablen A, B, X, m und n folgendermaßen definiert sind:
A ein polymerer Rest, umfassend oder bestehend aus der nachfolgenden Wiederholungseinheit gemäß der allgemeinen Formel II 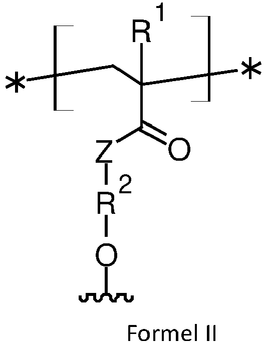
mit
R¹ Wasserstoff (H) oder eine Alkylgruppe
R² Alkyl- oder Arylgruppe
Z O, NH
n eine ganze Zahl von ≥ 1;
B eine Gruppierung gemäß der allgemeinen Formel III: 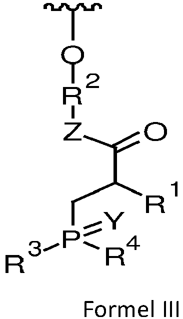
mit
Y O, S
R³ eine lineare oder verzweigte Alkyl-, Alkoxy-, Cycloalkyl-, Cycloalkoxy-, Aryl- oder Aryloxygruppe und
R⁴ eine lineare oder verzweigte Alkyl-, Alkoxy-, Cycloalkyl-, Cycloalkoxy-, Aryl- oder Aryloxygruppe
sind, wobei R³ und R⁴ auch zu einem cyclischen System verbunden sein können;
m eine ganze Zahl von ≥ 1;
X eine n + m -wertige phosphorhaltige Gruppierung ist.

2. Flammhemmendes Polymer gemäß Anspruch 1 **dadurch gekennzeichnet, dass**
1 ≤ n ≤ 5 sowie 1 ≤ m ≤ 5 ist und/oder
die Summe der Variablen n + m ≤ 10, vorzugsweise n + m ≤ 6, ist.

3. Flammhemmendes Polymer gemäß einem der vorangegangenen Ansprüche, **dadurch gekennzeichnet, dass** X eine Gruppierung ist der Gruppe mit den folgenden Formeln: 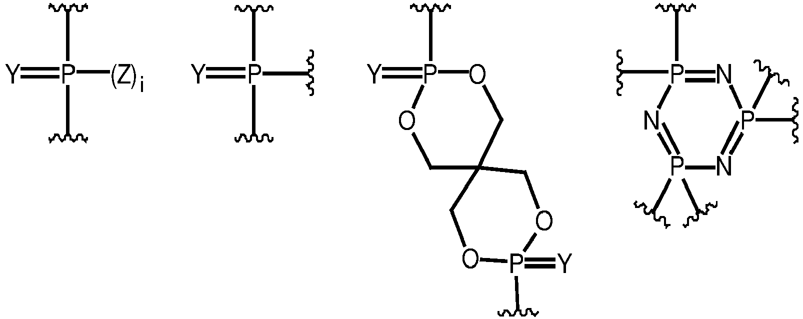 mit
Z O, NH
i 0 oder 1.

4. Flammhemmendes Polymer gemäß einem der vorangegangenen Ansprüche **dadurch gekennzeichnet, dass** B eine Gruppierung ist der Gruppe mit den folgenden Formeln:

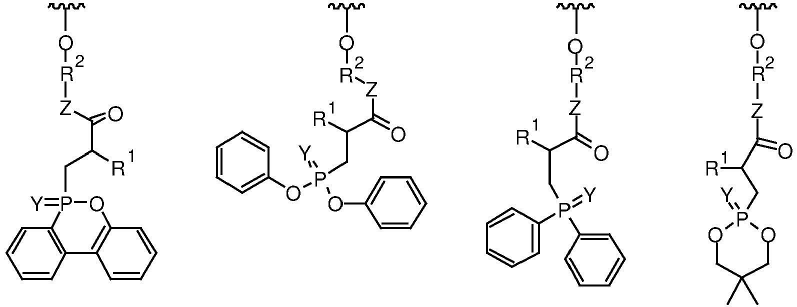

5. Flammhemmendes Polymer nach einem der vorangegangenen Ansprüche **dadurch gekennzeichnet, dass** das flammhemmende Polymer ein M_{w} von > 1 000 g mol⁻¹, bevorzugt ein M_{w} im Bereich von 2 500 g mol⁻¹ bis 300 000 g mol⁻¹, aufweist.

6. Flammhemmendes Polymer nach einem der vorangegangenen Ansprüche **dadurch gekennzeichnet, dass**
A ein polymerer Rest ist, der zusätzlich zur Wiederholungseinheit gemäß Formel II mindestens eine Wiederholungseinheit gemäß Formel IV umfasst 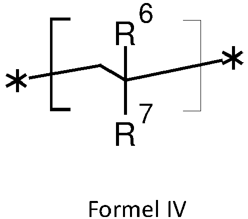
mit
R⁶ Wasserstoff (H) oder eine Alkylgruppe;
und
R⁷ ausgewählt aus der Gruppe mit den folgenden Formeln: 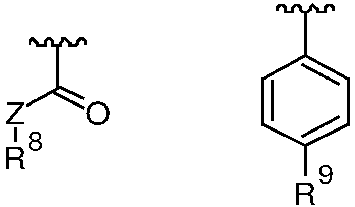
, wobei Z wie zuvor definiert
sowie R⁸ und R⁹ jeweils unabhängig voneinander Wasserstoff (H) oder eine Alkylgruppe ist.

7. Flammhemmendes Polymer nach Anspruch 6 **dadurch gekennzeichnet, dass** der molare Anteil der Wiederholungseinheit gemäß Formel II, bezogen auf die Summe der Wiederholungseinheiten gemäß Formel II sowie Formel IV, 0,01 bis 0,99; bevorzugt 0,1 bis 0,6 und besonders 0,2 bis 0,5 beträgt.

8. Flammschutz-Zusammensetzung enthaltend oder bestehend aus
a) 99 bis 1 Gew.-%, bevorzugt 90 bis 10 Gew.-%, besonders bevorzugt 70 bis 30 Gew.-% mindestens eines flammhemmenden Polymers nach einem der Ansprüche 1 bis 7;
b) 1 bis 99 Gew.-%, bevorzugt 10 bis 90 Gew.-%, besonders bevorzugt 30 bis 70 Gew.-% einer weiteren Verbindung mit flammhemmenden Eigenschaften;
jeweils bezogen auf die Gesamtmenge der Flammschutz-Zusammensetzung, wobei sich die Summe der Gewichtsanteile der einzelnen Komponenten auf 100 Gew.-% ergänzt.

9. Kunststoffzusammensetzung enthaltend
a) 65 bis 99,95 Gew.-% mindestens eines Polymers oder Polymerblends;
b) 0,05 bis 30 Gew.-% mindestens eines flammhemmenden Polymers nach einem der Ansprüche 1 bis 7;
c) 0 bis 30 Gew.-% einer weiteren Verbindung mit flammhemmenden Eigenschaften;
d) 0 bis 70 Gew.-% mindestens eines Füll- und/oder Verstärkungsstoffes;
e) 0 bis 20 Gew.-% mindestens eines Additivs;
jeweils bezogen auf die Gesamtmenge der Kunststoffzusammensetzung wobei sich die Summe der Gewichtsanteile der einzelnen Komponenten auf 100 Gew.-% ergänzt.

10. Kunststoffzusammensetzung nach Anspruch 9 **dadurch gekennzeichnet, dass** das mindestens eine Polymer ein Elastomer oder ein Duromer oder ein thermoplastisches Polymer ist bevorzugt ausgewählt aus der Gruppe bestehend aus Polyolefinen, Polyamiden, Polyestern, besonders bevorzugt Polylactiden, und Kombinationen hieraus.

11. Verfahren zur Herstellung eines flammhemmenden Polymers nach einem der Ansprüche 1 bis 7, bei welchem
a) mindestens eine Phosphorverbindung der allgemeinen Formel V
X-Mₘ₊ₙ Formel V
mit mindestens n+m Äquivalenten mindestens einer α,β-ungesättigten Carbonylverbindung der allgemeinen Formel VI 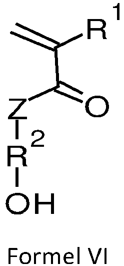 zu mindestens einem Addukt der allgemeinen Formel VII 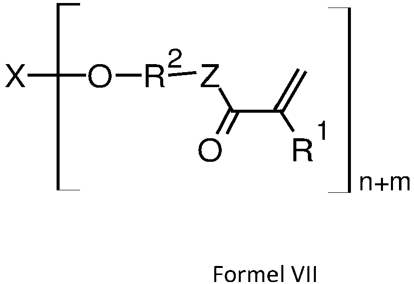 umgesetzt wird,
wobei X, m, n, Z, R¹ und R² wie in Anspruch 1 definiert ist sowie mit
M Halogen-oder Alkoxygruppe;
b) das mindestens eine Addukt aus Schritt a) mit n+m-x Äquivalenten mindestens einer Organophosphorverbindung der allgemeinen Formel VIII 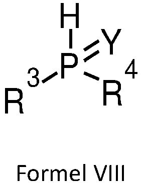 umsetzt wird,
wobei R³ und R⁴ wie in Anspruch 1 definiert sind;
und das mindestens eine Addukt aus Schritt a) sowie die mindestens eine Organophosphorverbindung geeignet sind in einer Phospha-Michael Addition miteinander zu reagieren
und x im Bereich von 0,5 bis 1,5; bevorzugt im Bereich von 0,75 bis 1,25 und besonders bevorzugt im Bereich von 0,9 bis 1,1; liegt;
c) das mindestens eine Addukt aus Schritt b)
oder
das mindestens eine Addukt aus Schritt b) sowie mindestens ein weiteres radikalisch polymerisierbares Monomer der allgemeinen Formel IX 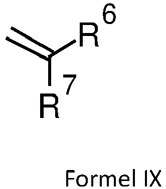
, wobei R⁶ und R⁷ wie in Anspruch 6 definiert ist, polymerisiert wird.

12. Verfahren nach Anspruch 11 **dadurch gekennzeichnet, dass** die mindestens eine phosphorhaltige Verbindung, die in Schritt a) eingesetzt wird, mit X definiert ist, wobei X ausgewählt ist aus Gruppe der Verbindungen mit den folgenden Formeln: 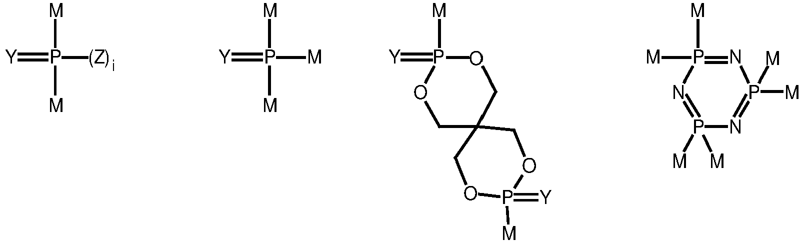 , wobei Z und i wie in Anspruch 3 definiert ist, und/oder .
dass die mindestens eine Organophosphorverbindung, die in Schritt b) eingesetzt wird, ausgewählt ist aus Gruppe der Verbindungen mit den folgenden Formeln:

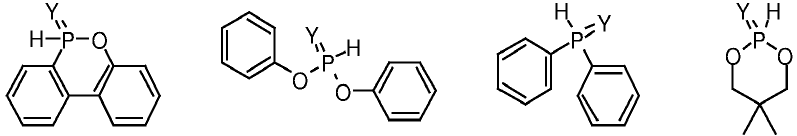

13. Verfahren nach einem der Ansprüche 11 bis 12 **dadurch gekennzeichnet, dass** die mindestens eine Phosphorverbindung in Schritt a) bevorzugt mit 2-Hydroxyethylacrylat umgesetzt wird.

14. Verwendung des flammhemmenden Polymers nach einem der Ansprüche 1 bis 7 als Flammschutzmittel, insbesondere für Kunststoffe oder Lederapplikationen.

15. Verwendung nach vorhergehendem Anspruch, **dadurch gekennzeichnet, dass** es sich bei den Kunststoffen um (Co)Polyester, Polyolefine, Polyamide und Kombinationen hiervon handelt.

## Claims

1. A flame retardant polymer comprising phosphorus-containing repeating units of general formula I 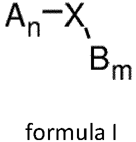 , wherein the variables A, B, X, m and n are defined as follows:
A is a polymer group comprising or consisting of the following repeating units according to general formula II 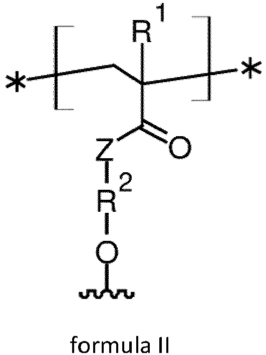
where
R¹ is hydrogen (H) or an alkyl group
R² is an alkyl or aryl group
Z is O, NH
n is an integer ≥ 1;
B is a grouping according to general formula III 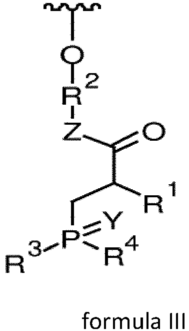
where
Y is O, S
R³ is a linear or branched alkyl, alkoxy, cycloalkyl, cycloalkoxy, aryl or aryloxy group and
R⁴ is a linear or branched alkyl, alkoxy, cycloalkyl, cycloalkoxy, aryl or aryloxy group,
wherein R³ and R⁴ can also be linked to form a cyclic system;
m is an integer ≥ 1;
X is a (n + m)-valent phosphoric grouping.

2. The flame retardant polymer according to claim 1, **characterized in that**
1 ≤ n ≤ 5 and 1 ≤ m ≤ 5 and/or
the sum of the variables n + m ≤ 10, preferably n + m ≤ 6.

3. The flame retardant polymer according to any one of the preceding claims, **characterized in that** X is a grouping of the group with the following formulas: 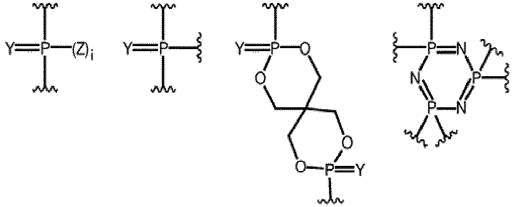 where
Z is O, NH
i is O or 1.

4. The flame retardant polymer according to any one of the preceding claims, **characterized in that** B is a grouping of the group with the following formulas:

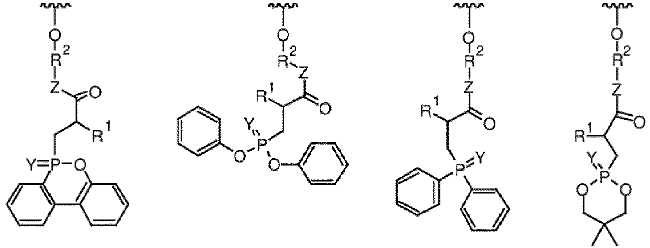

5. The flame retardant polymer according to any one of the preceding claims, **characterized in that** the flame retardant polymer has a M_{w} of > 1,000 g mol⁻¹, preferably a M_{w} in the range of from 2,500 g mol⁻¹ to 300,000 g mol⁻¹.

6. The flame retardant polymer according to any one of the preceding claims **characterized in that**
A is a polymer group that, additionally to the repeating unit according to formula II, also comprises at least one repeating unit according to formula IV 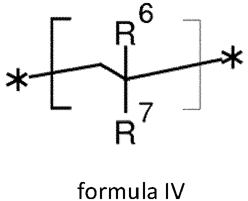 where
R⁶is hydrogen (H) or an alkyl group; and
R⁷ is selected from the group with the following formulas: 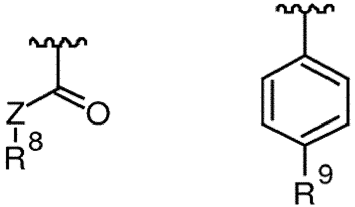
wherein Z is defined previously
and R8 and R9, each independently of one another, are hydrogen (H) or an alkyl group.

7. The flame retardant polymer according to claim 6, **characterized in that** the molar fraction of the repeating unit according to formula II, in relation to the sum of the repeating units according to formula II and also formula IV, is 0.01 to 0.99, preferably 0.1 to 0.6, and particularly 0.2 to 0.5.

8. A flame retardant composition containing or consisting of
a) 99 to 1 wt.%, preferably 90 to 10 wt.%, particularly preferably 70 to 30 wt.% of at least one flame retardant polymer according to any one of claims 1 to 7;
b) 1 to 99 wt.%, preferably 10 to 90 wt.%, particularly preferably 30 to 70 wt.% of a further compound having flame retardant properties;
in each case in relation to the total amount of the flame retardant composition, wherein the sum of the weight shares of the individual components gives 100 wt.%.

9. A plastics composition containing
a) 65 to 99.95 wt.% of at least one polymer or polymer blend;
b) 0.05 to 30 wt.% of at least one flame retardant polymer according to any one of claims 1 to 7;
c) 0 to 30 wt.% of a further compound having flame retardant properties;
d) 0 to 70 wt.% of at least one filler and/or reinforcing substance;
e) 0 to 20 wt.% of at least one additive;
in each case in relation to the total amount of the plastics composition, wherein the sum of the weight shares of the individual components gives 100 wt.%.

10. The plastics composition according to claim 9, **characterized in that** the at least one polymer is an elastomer or a thermoset or a thermoplastic polymer preferably selected from the group consisting of polyolefins, polyamides, polyesters, particularly preferably polylactides, and combinations thereof.

11. A method for producing a flame retardant polymer according to any one of claims 1 to 7, in which
a) at least one phosphorus compound of general formula
X-Mₘ₊ₙ formula V
is reacted with at least n+m equivalents of at least one «^-unsaturated carbonyl compound of general formula VI 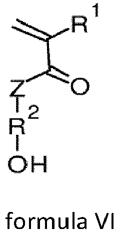 to give at least one adduct of general formula VII 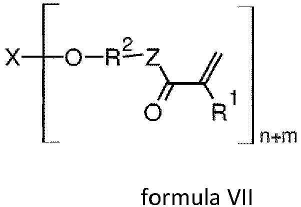
wherein X, m, n, Z, R¹ and R² are as defined in claim 1, and with
M being a halogen group or alkoxy group;
b) the at least one adduct from step a) is reacted with n+m-x equivalents of at least one organophosphorus compound of general formula VIII 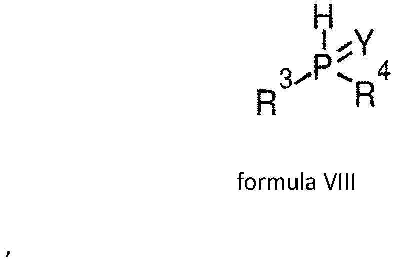
wherein R³ and R⁴ are as defined in claim 1;
and the at least one adduct from step a) and also the at least one organophosphorus compound are suitable for reacting with one another in a phospha-Michael addition
and x lies in the range of from 0.5 to 1.5; preferably in the range of from 0.75 to 1.25 and particularly preferably in the range of from 0.9 to 1.1;
c) the at least one adduct from step b)
or
the at least one adduct from step b) and also at least one further radically polymerizable monomer of general formula IX 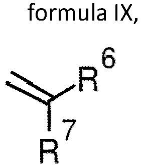
wherein R⁶ and R⁷ are as defined in claim 6, is polymerized.

12. The method according to claim 11, **characterized in that** the at least one phosphorus compound used in step a) is defined X, wherein X is selected from the group of compounds with the following formulas: 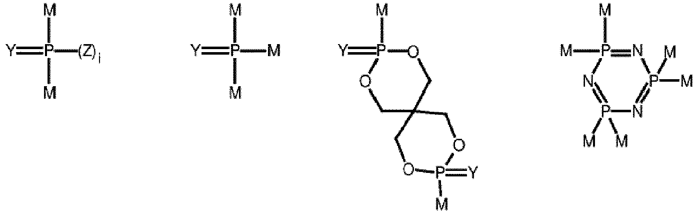
wherein Z and i are as defined in claim 3, and/or
**in that** the at least one organophosphorus compound used in step b) is selected from the group of compounds with the following formulas:

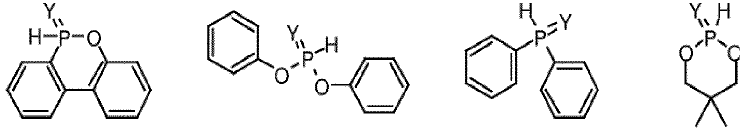

13. The method according to any one of claims 11 to 12, **characterized in that** the at least one phosphorus compound in step a) is preferably reacted with 2-hydroxyethyl acrylate.

14. Use of the flame retardant polymer according to any one of claims 1 to 7 as a flame retardant, in particular for plastics or leather applications.

15. The use according to the preceding claim, **characterized in that** the plastics are (co)polyesters, polyolefins, polyamides and combinations thereof.

## Revendications

1. Polymère ignifuge comprenant des unités répétitives contenant du phosphore de formule générale I 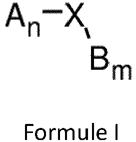 où les variables A, B, X, m et n sont définies comme suit :
A est un résidu polymère comprenant ou consistant en l'unité répétitive suivante selon la formule générale Il 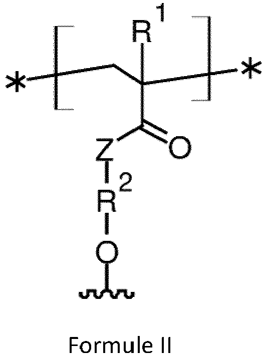
avec
R¹ hydrogène (H) ou un groupe alkyle
R² groupe alkyle ou aryle
Z O, NH
n un nombre entier ≥ 1 ;
B un groupement selon la formule générale III : 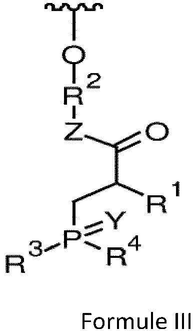
avec
Y O, S
R³ un groupe alkyle, alcoxyle, cycloalkyle, cycloalcoxyle, aryle ou aryloxy, linéaire ou ramifié, et
R⁴ un groupe alkyle, alcoxyle, cycloalkyle, cycloalcoxyle, aryle ou aryloxy, linéaire ou ramifié
R³ et R⁴ pouvant également être liés pour former un système cyclique ;
m un nombre entier ≥ 1 ;
X est un groupement n + m -valent contenant du phosphore.

2. Polymère ignifuge selon la revendication 1, **caractérisée en ce que**
1 ≤ n ≤ 5 ainsi que 1 ≤ m ≤ 5 et/ou
est la somme des variables n + m ≤ 10, de préférence n + m ≤ 6.

3. Polymère ignifuge selon l'une quelconque des revendications précédentes, **caractérisé en ce que** X est un groupement du groupe ayant les formules suivantes : 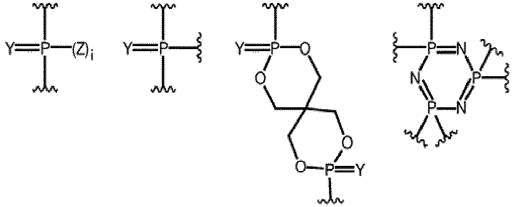 avec
z O, NH
i 0 ou 1.

4. Polymère ignifuge selon l'une quelconque des revendications précédentes, **caractérisé en ce que** B est un groupement du groupe ayant les formules suivantes :

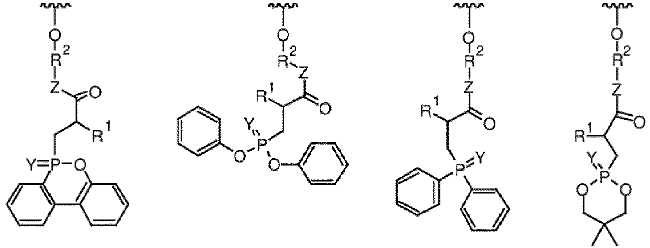

5. Polymère ignifuge selon l'une quelconque des revendications précédentes, **caractérisé en ce que** le polymère ignifuge présente une M_{w} > 1 000 g.mol⁻¹, de préférence une M_{w} dans la plage de 2 500 g.mol⁻¹ à 300 000 g.mol⁻¹.

6. Polymère ignifuge selon l'une quelconque des revendications précédentes, **caractérisée en ce que**
A est un radical polymère qui, en plus du motif répétitif selon la formule II, comprend au moins un motif répétitif selon la formule IV 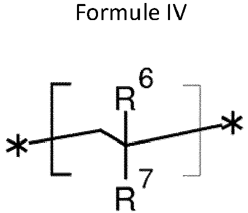 avec
R⁶ un atome d'hydrogène (H) ou un groupe alkyle ; et
R⁷ choisi dans le groupe comprenant les formules suivantes : 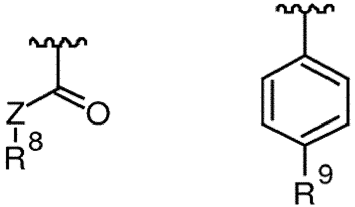
où Z est défini comme précédemment
ainsi que R⁸ et R⁹ représentent chacun indépendamment l'hydrogène (H) ou un groupe alkyle.

7. Polymère ignifuge selon la revendication 6, **caractérisé en ce que** la proportion molaire de l'unité répétitive selon la formule II, par rapport à la somme des unités répétitives selon la formule Il ainsi que la formule IV, est de 0,01 à 0,99 ; de préférence de 0,1 à 0,6 et en particulier de 0,2 à 0,5.

8. Composition ignifuge contenant ou consistant en
a) 99 à 1 % en poids, de préférence 90 à 10 % en poids, de manière particulièrement préférée 70 à 30 % en poids d'au moins un polymère ignifuge selon l'une des revendications 1 à 7 ;
b) de 1 à 99 % en poids, de préférence de 10 à 90 % en poids, de manière particulièrement préférée de 30 à 70 % en poids d'un autre composé ayant des propriétés ignifuges ;
dans chaque cas par rapport à la quantité totale de la composition ignifuge, la somme des pourcentages en poids des différents composants se complétant à 100 % en poids.

9. Composé synthétique contenant
a) 65 à 99,95 % en poids d'au moins un polymère ou mélange de polymères ;
b) 0,05 à 30 % en poids d'au moins un polymère ignifuge selon l'une quelconque des revendications 1 à 7 ;
c) 0 à 30 % en poids d'un autre composé ayant des propriétés ignifuges ;
d) 0 à 70 % en poids d'au moins un produit de charge et/ou de renforcement ; et
e) 0 à 20 % en poids d'au moins un liant ;
respectivement par rapport à la quantité totale du composé synthétique, la somme des pourcentages en poids des différents composants se complétant à 100 % en poids.

10. Composé.synthétique selon la revendication 9, **caractérisé en ce que** ledit au moins un polymère est un élastomère ou un duromère ou un polymère thermoplastique, de préférence choisi dans le groupe constitué par les polyoléfines, les polyamides, les polyesters, et de manière particulièrement préférée les polylactides, et des combinaisons de ceux-ci.

11. Procédé pour la fabrication d'un polymère ignifuge selon l'une quelconque des revendications 1 à 7, selon lequel
a) au moins un composé du phosphore de formule générale V
X-Mₘ₊ₙ Formule V
avec au moins n+m équivalents d'au moins un composé carbonyle α-β-insaturé de formule générale VI 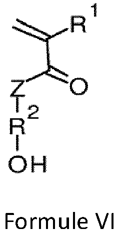 en au moins un adduit de formule générale VII 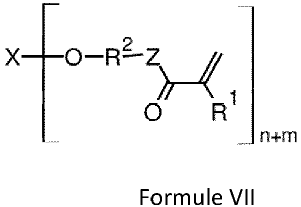 est mis en oeuvre,
où X, m, n, Z, R¹ et R² sont tels que définis dans la revendication 1
ainsi qu'avec
M groupe halogène ou alcoxyle ;
b) le au moins un adduit de l'étape a) avec n+m-x équivalents d'au moins un composé organophosphoré de formule générale VIII 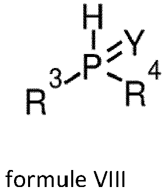 est mis en oeuvre,
où R³ et R⁴ sont tels que définis dans la revendication 1 ;
et ledit au moins un adduit de l'étape a) et ledit au moins un composé organophosphoré sont aptes à réagir l'un avec l'autre en addition
et x se situe dans la plage de 0,5 à 1,5 ; de préférence dans la plage de 0,75 à 1,25 et de manière particulièrement préférée dans la plage de 0,9 à 1,1 ;
c) le au moins un adduit de l'étape b) ou le au moins un adduit de l'étape b) ainsi qu'au moins un autre monomère polymérisable par voie radicalaire de formule générale IX 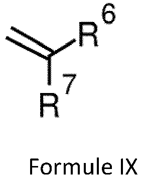 dans laquelle R6 et R7 sont tels que définis dans la revendication 6.

12. Procédé selon la revendication 11, **caractérisé en ce que** le au moins un composé contenant du phosphore utilisé dans l'étape a) est défini par X, où X est choisi dans le groupe des composés ayant les formules suivantes : 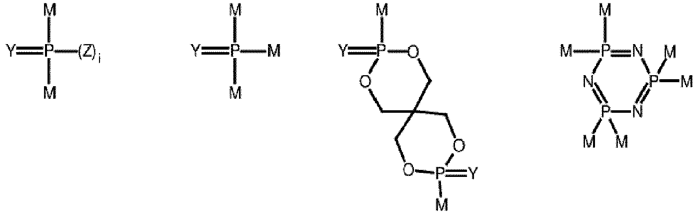
, où Z et i sont tels que définis dans la revendication 3, et/ou.
**en ce que** ledit au moins un composé organophosphoré utilisé dans l'étape b) est choisi dans le groupe des composés ayant les formules suivantes :

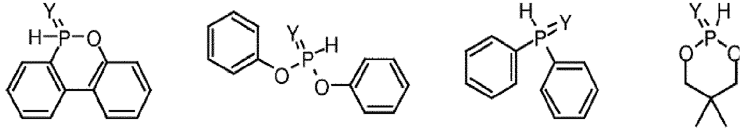

13. Procédé selon l'une quelconque des revendications 11 à 12, **caractérisé en ce que** ledit au moins un composé phosphoré est mis à réagir à l'étape a) de préférence avec l'acrylate de 2-hydroxyéthyle.

14. Utilisation du polymère ignifuge selon l'une quelconque des revendications 1 à 7 comme agent ignifugeant, en particulier pour des matières plastiques ou des applications de cuir.

15. Utilisation selon la revendication précédente, **caractérisée en ce que** les matières plastiques sont des (co)polyesters, des polyoléfines, des polyamides et des combinaisons de ceux-ci.
